# EUROPÄISCHE PATENTSCHRIFT

(11) **EP 1 103 792 B1**
(45) Veröffentlichungstag und Bekanntmachung des Hinweises auf die Patenterteilung: **21.04.2004**
(21) Anmeldenummer: 00123202.4
(22) Anmeldetag: 26.10.2000
(51) Int. Cl.: G01F 1/22

(54) **Verfahren zur Zustandsprognose eines Schwebekörperdurchflussmessgerät**
Method for determining the state of a floating body flow meter
Pocédé pour prevoir l'état d'un debitmètre à corps flottant

(30) Priorität: 25.11.1999 DE 19956590
(43) Veröffentlichungstag der Anmeldung: 30.05.2001
(73) Patentinhaber: KROHNE MESSTECHNIK GMBH & CO. KG, 47058 Duisburg (DE)
(72) Erfinder: Bernard, Heinz, Dipl.-Phys., 47057 Duisburg (DE); Haak, Reinhard, Dr.-Ing., 58300 Wetter (DE)
(74) Vertreter: Gesthuysen, von Rohr & Eggert

(56) Entgegenhaltungen:
- DE-A- 2 427 373
- DE-A- 3 411 156
- DE-C- 19 624 974
- US-A- 4 200 806
- US-A- 5 327 789

## Beschreibung

Die Erfindung betrifft ein Verfahren zur Zustandsprognose eines Schwebekörperdurchflußmeßgeräts, wobei das Schwebekörperdurchflußmeßgerät ein von dem Medium gegen die Schwerkraft durchströmtes Meßrohr, einen in dem Meßrohr vorgesehenen und wenigstens in Strömungsrichtung beweglichen Schwebekörper und eine Erfassungseinrichtung aufweist, mit der die Bewegung des Schwebekörpers erfaßt wird, wobei aus einem der Bewegung des Schwebekörpers entsprechenden Bewegungssignal ein der Schwingungsamplitude des Schwebekörpers entsprechendes Schwingungssignal und der Hub des Schwebekörpers abgeleitet werden und ein Fehler- bzw. Alarmsignal zur Blockadeerkennung erzeugt wird, wenn das Schwingungssignal für eine vorbestimmte Zeitdauer einen Mindestwert unterschreitet. Ein solches Verfahren ist z.B. aus der DE 196 24 974 C1 bekannt.

Schwebekörperdurchflußmeßgeräte werden seit der Mitte des vergangenen Jahrhunderts zur Erfassung von Volumendurchflüssen in geschlossenen Rohrleitungen eingesetzt. Sie können auch heute noch vielfach in Durchflußmeßeinrichtungen in der chemischen und in der verfahrenstechnischen Industrie gefunden werden.

Ein Schwebekörperdurchflußmeßgerät besteht in seiner einfachsten Ausfiihrungsform aus einem konischen Meßrohr und dem Schwebekörper. Dabei wird das Meßrohr gegen die Schwerkraft, d. h. von unten nach oben, von dem Medium durchströmt, dessen Durchfluß gemessen werden soll. Als Meßrohr wird ein sich nach oben erweiterndes konisches Rohr verwendet, in dem sich der Schwebekörper, ein zweckmäßig gestalteter, wenigstens in Strömungsrichtung frei beweglicher Meßkörper, befindet, der zusammen mit dem Meßrohr eine Drosselstelle bildet. Die Dichte des Schwebekörpers ist größer als die des durch das Meßrohr strömenden Mediums. In Abhängigkeit vom Durchfluß stellt sich der Schwebekörper im eingeschwungenen Zustand in einer bestimmten Höhenstellung im Meßrohr ein, die sich durch das Gleichgewicht der durch die Strömung hervorgerufenen, auf den Schwebekörper übertragenen hydrodynamischen Kraft und der Differenz der Gewichts- bzw. Auftriebskräfte des Schwebekörpers ergibt. Diese Höhenstellung des Schwebekörpers, auch als Hub des Schwebekörpers bezeichnet, wird dann entweder vom Betrachter direkt über eine Skala an einem transparenten Meßrohr abgelesen oder durch z. B. eine Magnetkupplung auf eine externe Skala und/oder einen elektrischen Meßaufnehmer übertragen.

Auch im eingeschwungenen Zustand des Schwebekörpers, in dem der Schwebekörper einen gewissen Hub aufweist, steht der Schwebekörper selbst bei konstanten Strömungsverhältnisse nicht völlig still, sondern führt wenigstens eine Schwingungsbewegung in Strömungsrichtung bzw. dieser entgegengesetzt aus. Darüber hinaus ist typischerweise auch eine Schwingungsbewegung des Schwebekörpers senkrecht zur Strömungsrichtung sowie eine Rotationsbewegung des Schwebekörpers zu beobachten. Dies wird gemäß einem in der DE 196 24 974 C1 beschriebenen Schwebekörperdurchflußmeßgerät ausgenutzt, indem die Amplitude, also die maximale Auslenkung des Schwebekörpers erfaßt und analysiert wird und ein Fehler- bzw. Alarmsignal ausgegeben wird, wenn die Amplitude des Schwebekörpers einen zuvor festgelegten Mindestwert unterschreitet. Das Fehler- bzw. Alarmsignal weist dann auf einen Fehlerzustand des Schwebekörperdurchflußmeßgeräts hin, nämlich auf eine Blockade des Schwebekörpers in dem Meßrohr. Mit diesem bekannten Schwebekörperdurchflußmeßgerät ist es somit möglich, eine akut vorliegende mechanische Blockade des Schwebekörpers zu detektieren, so daß vermieden wird, daß der Hub des Schwebekörpers, bei dem die Blockade vorliegt, als tatsächlicher, den Durchfluß darstellender Meßwert interpretiert wird.

Bei dem oben beschriebenen, aus dem Stand der Technik bekannten Schwebekörperdurchflußmeßgerät werden somit die Schwingungsbewegungen des Schwebekörpers ausgenutzt, um bei einem nichttransparenten Meßrohr, bei dem der Schwebekörper im Meßrohr nicht unmittelbar beobachtet werden kann, eine Blockade des Schwebekörpers zu detektieren. Bei diesem aus dem Stand der Technik bekannten Schwebekörperdurchflußmeßgerät ist jedoch nachteilig, daß erst dann, wenn es tatsächlich zu einer Fehlfunktion des Schwebekörperdurchflußmeßgeräts gekommen ist, ein entsprechendes Fehler- bzw. Alarmsignal ausgegeben wird. Unter Umständen hat dann nämlich schon ein zu geringer oder ein zu großer Durchfluß des Mediums zu Schäden in dem Rohrsystem oder in einem an diesem angeschlossenen System geführt.

Es ist die Aufgabe der Erfindung, ein Verfahren zur Zustandsprognose eines Schwebekörperdurchflußmeßgeräts anzugeben, dessen Sensitivität gegenüber Fehlerzuständen des Schwebekörperdurchflußmeßgeräts verbessert ist.

Das erfindungsgemäße Verfahren zur Zustandsprognose eines Schwebekörperdurchflußmeßgeräts, mit dem die weiter oben hergeleitete und aufgezeigte Aufgabe gelöst ist, ist ausgehend von dem eingangs beschriebenen Verfahren dadurch gekennzeichnet, daß das Bewegungssignal, umfassend das Schwingungssignal und den Hub, für wenigstens eine vorbestimmte Zeitdauer gespeichert wird, das gegenwärtige Bewegungssignal mit dem gespeicherten Bewegungssignal verglichen wird und eine Fehlfunktion des Schwebekörperdurchflußmeßgeräts detektiert und angezeigt wird, wenn aufgrund des Vergleichs des gegenwärtigen Bewegungssignals mit dem gespeicherten Bewegungssignal eine Verletzung der Monotoniebedingung, daß bei einem größeren Hub auch ein Schwingungssignal mit einer größeren Amplitude erwartet wird, festgestellt wird.

Es sei betont, daß das, was das erfindungsgemäße Verfahren zur Zustandsprognose eines Schwebekörperdurchflußmeßgeräts zu leisten vermögen, nicht nur darin liegt, einen gegenwärtig schon vorliegenden Störzustand, wie z. B. eine Blockade des Schwebekörpers, zu detektieren und anzuzeigen. Im Gegensatz dazu ist nämlich erfindungsgemäß eine Aussage über einen in der Zukunft liegenden, erwarteten Zustand des Schwebekörperdurchflußmeßgeräts möglich. Der Verwender wird somit zu einem solchen Zeitpunkt über einen voraussichtlich eintretenden Störzustand informiert, zu dem noch Maßnahmen getroffen werden können, damit dieser Störzustand überhaupt nicht eintritt. Die Erfindung trägt somit nicht nur zur Feststellung eines Störzustandes des Schwebekörperdurchflußmeßgeräts bei, sondern vielmehr schon zu einer Prävention eines solchen Störzustandes.

Bei dem erfindungsgemäßen Verfahren wird bis zur Ausgabe eines Fehlersignals nicht so lange gewartet, bis tatsächlich eine Fehlfunktion des Geräts vorliegt. Statt dessen findet ständig eine Beobachtung des Verhaltens des Schwebekörpers statt, so daß dementsprechend Veränderungen im Verhalten des Schwebekörpers frühzeitig erkannt werden können. Insofern kann der Verwender auch frühzeitig auf eine drohende Fehlfunktion des Geräts hingewiesen werden.

Die Speicherung des Bewegungssignals erfolgt dabei vorzugsweise in der Prognoseeinheit.

Im allgemeinen wird erwartet, daß bei größerem Durchfluß und somit größerem Hub des Schwebekörpers Schwingungsbewegungen desselben mit einer größeren Amplitude erwartet werden. Diese Erwartung für das normale Funktionieren des Schwebekörperdurchflußmeßgeräts stellt eine Monotoniebedingung dar, deren Verletzung durch Vergleiche der gegenwärtigen Schwingungsamplituden mit vergangenen und abgespeicherten Schwingungsamplituden erfaßbar ist. Wird also eine Verletzung dieser Monotoniebedingung festgestellt, so muß eine Fehlfunktion des Schwebekörperdurchflußmeßgeräts vorliegen, was dem Verwender angezeigt wird.

Es ist möglich, daß das Bewegungssignal lediglich Informationen über die Bewegung des Schwebekörpers bezüglich einer seiner Bewegungskomponenten enthält. Es ist jedoch bevorzugt, daß mit Hilfe des Bewegungssignals Informationen über die Bewegung des Schwebekörpers längs der Strömungsrichtung des Mediums und/oder Informationen über die Bewegung des Schwebekörpers senkrecht zur Strömungsrichtung des Mediums und/oder Informationen über Rotationsbewegungen des Schwebekörpers übertragen werden. Dabei besteht eine bevorzugte Weiterbildung der Erfindung darin, daß bei dem Vergleich des Bewegungssignals mit den erwarteten Werten jeweils getrennt ein Vergleich bezüglich der Bewegung des Schwebekörpers längs der Strömungsrichtung des Mediums und/oder der Bewegung des Schwebekörpers senkrecht zur Strömungsrichtung des Mediums und/oder der Rotationsbewegung des Schwebekörpers durchgeführt wird.

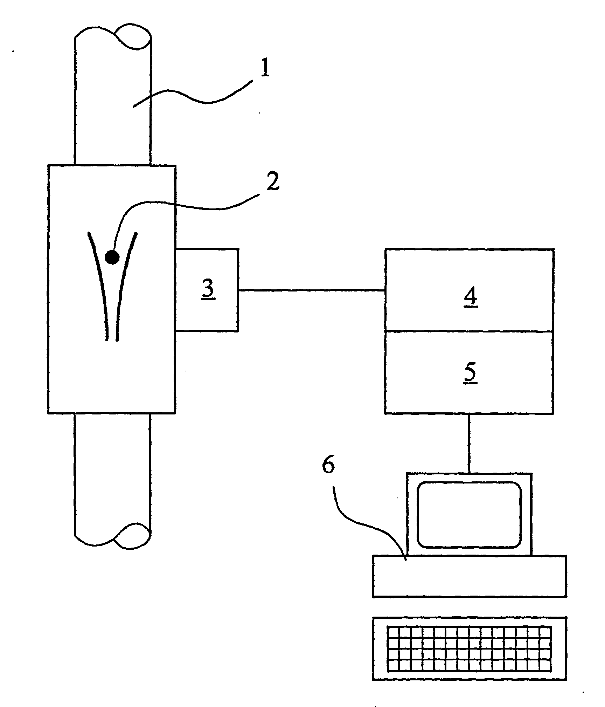

Im einzelnen gibt es nun eine Vielzahl von Möglichkeiten, das erfindungsgemäße Verfahren zur Zustandsprognose eines Schwebekörperdurchflußmeßgeräts auszugestalten und weiterzubilden. Dazu wird einerseits auf den dem Patentanspruch 1 nachgeordneten Patentanspruch und andererseits auf die folgende detaillierte Beschreibung eines bevorzugten Ausführungsbeispiels in Verbindung mit der Zeichnung verwiesen.

Die einzigen Figur zeigt schematisch den Aufbau eines Schwebekörperdurchflußmeßgeräts.

Das aus der Figur ersichtliche Schwebekörperdurchflußmeßgerät weist ein Meßrohr 1 auf, das entgegen der Schwerkraft, also von unten nach oben, von einem Medium durchströmt wird, dessen Durchfluß gemessen werden soll. Dabei ist ein Schwebekörper 2 vorgesehen, dessen Hub und dessen Bewegungen mit einer Erfassungseinrichtung 3 erfaßbar sind. Die Erfassungseinrichtung 3 weist einen nicht weiter dargestellten Magneten auf, der mit einem an dem Schwebekörper angebrachten Magneten in Wechselwirkung steht und somit dessen Hub bzw. dessen sonstigen Bewegungen folgt. Das so erzeugte mechanische Bewegungssignal wird in der Erfassungseinrichtung 3 dann in ein elektrisches Bewegungssignal umgewandelt und einer Diagnoseeinheit 4 zugeführt. Die Diagnoseeinheit 4 ist mit einer Prognoseeinheit 5 in einer Einheit ausgebildet, so daß der Prognoseeinheit 5 ebenfalls das von der Erfassungseinrichtung 3 her kommende Bewegungssignal zugeführt wird. Es ist selbstverständlich nicht erforderlich, daß die Diagnoseeinheit 4 und die Prognoseeinheit 5 voneinander getrennte Einrichtungen darstellen. Insbesondere bei der Verwendung eines Mikroprozessors für die Diagnoseeinheit 4 bzw. die Prognoseeinheit 5 können diese in einer einzigen Einheit, d.h. in einem einzigen Mikroprozessor, realisiert sein.

Aufgabe der Diagnoseeinheit 4 ist es, festzustellen, ob das Schwebekörperdurchflußmeßgerät gegenwärtig überhaupt noch fehlerfrei arbeitet, d. h. den aktuellen Durchfluß anzeigt. Dazu wird in der Diagnoseeinheit 4 aus dem Bewegungssignal ein der Schwingungsamplitude des Schwebekörpers 2 entsprechendes Schwingungssignal abgeleitet und überwacht. Fällt das Schwingungssignal für eine vorbestimmte Zeitdauer unter einen voreingestellten Mindestwert, der aufgrund von Erfahrungswerten gewählt worden ist, so wird in der Diagnoseeinheit 4 ein Fehler- bzw. Alarmsignal erzeugt, das angibt, daß der Schwebekörper 2 blockiert ist. Das heißt, daß das Schwebekörperdurchflußmeßgerät nicht mehr richtig funktioniert und anstatt des aktuellen Durchflusses einen nicht unbedingt dem aktuellen Durchfluß entsprechenden Wert ausgibt, der dem Hub entspricht, an dem der Schwebekörper 2 festsitzt. Die Ausgabe dieses Fehler- bzw. Alarmsignals erfolgt über einen mit der Diagnoseeinheit 4 und der Prognoseeinheit 5 verbundenen Computer 6. Der Verwender des Schwebekörperdurchflußmeßgeräts gemäß dem bevorzugten Ausführungsbeispiel der Erfindung wird auf diese Weise durch ein optisches und ein akustisches Signal auf die Blockade des Schwebekörpers 2 hingewiesen und kann entsprechende Maßnahmen ergreifen.

Darüber hinaus ist es mit dem Schwebekörperdurchflußmeßgerät für den Verwender möglich, sich zu jeder Zeit ein Bild über den gegenwärtigen Zustand des Schwebekörperdurchflußmeßgeräts sowie über den zukünftigen, zu erwarteten Zustand des Schwebekörperdurchflußmeßgeräts zu machen. Dazu wird das Bewegungssignal auch an die Prognoseeinheit 5 weitergeleitet, in der das Bewegungssignal bei dem vorliegend beschriebenen bevorzugten Ausführungsbeispiel der Erfindung in seine Komponenten entsprechend der Bewegung des Schwebekörpers längs der Strömungsrichtung des Mediums bzw. der Bewegung des Schwebekörpers senkrecht zur Strömungsrichtung des Mediums zerlegt wird. Das Prinzip der Erfindung erfordert eine solche Zerlegung des Bewegungssignals in voneinander verschiedene Komponenten entsprechend voneinander verschiedener Bewegungen des Schwebekörpers nicht unbedingt. Dies ermöglicht jedoch aufgrund des größeren Informationsgehalts des zum Vergleich mit vorhandenen Werten verfügbaren Signals eine bessere und genauere Vorhersage des zukünftig zu erwartenden Verhaltens des Schwebekörperdurchflußmeßgeräts. Die unterschiedlichen Bewegungskomponenten werden dazu mit Werten für die einzelnen Komponenten verglichen, die vor dem eigentlichen Meßeinsatz des Schwebekörperdurchflußmeßgeräts mit dem Medium, das tatsächlich für die Messung verwendet wird, in Abhängigkeit vom Hub des Schwebekörpers 2 gemessen worden sind. Die entsprechenden Werte sind in einem in der Figur nicht weiter dargestellten Speicher in der Prognoseeinheit 5 abgespeichert und aus diesem abrufbar. Auf diese Weise ist zu jeder Zeit ein Vergleich des gegenwärtigen Verhaltens des Schwebekörperdurchflußmeßgeräts mit seinem Verhalten bei Normalbedingungen, d. h. im Auslieferungszustand bzw. im ursprünglichen Einbauzustand möglich. Aufgrund von Erfahrungswerten, die z. B. in Langzeittests mit den Schwebekörperdurchflußmeßgeräten erzielt worden sind, können dann Aussagen über den gegenwärtigen Zustand des Schwebekörperdurchflußmeßgeräts sowie über den voraussichtlichen, zukünftig erwarteten Zustand des Schwebekörperdurchflußmeßgeräts erzeugt werden.

Darüber hinaus werden die zeitlichen Verläufe der einzelnen Bewegungskomponenten in der Prognoseeinheit 5 des Schwebekörperdurchflußmeßgeräts in dem in der Figur nicht weiter dargestellten Speicher abgespeichert, so daß für zukünftige Prognosen ein Rückgriff auf vergangene Werte möglich ist, was die Vorhersage von Trends für die weitere Entwicklung des Zustands des Schwebekörperdurchflußmeßgeräts erleichtert.

Entsprechend der Ausgabe des Fehler- bzw. Alarmsignals zur Blockadeerkennung des Schwebekörpers 2 werden auch die Informationen über den gegenwärtigen bzw. den zukünftig erwarteten Zustand des Schwebekörperdurchflußmeßgeräts über einen Computer 6 graphisch und akustisch ausgegeben. Darüber hinaus kann in dem Computer 6 eine von dem Verwender des Schwebekörperdurchflußmeßgeräts selbst erstellte, d. h. auch z. B. selbst programmierte weitere Auswertung bzw. Weiterverarbeitung dieser Informationen erfolgen. Insbesondere ist es dabei auch möglich, wenn in der Figur auch nicht dargestellt, für eine in dem Computer 6 durchgeführte Weiterverarbeitung zusätzliche Parameter des Systems, wie z. B. die Temperatur des Schwebekörperdurchflußmeßgeräts, die dem Computer 6 von einen entsprechenden Sensor zugeführt werden, mit zu verarbeiten.

## Patentansprüche

1. Verfahren zur Zustandsprognose eines Schwebekörperdurchflußmeßgeräts, wobei das Schwebekörperdurchflußmeßgerät ein von dem Medium gegen die Schwerkraft durchströmtes Meßrohr (1), einen in dem Meßrohr (1) vorgesehenen und wenigstens in Strömungsrichtung beweglichen Schwebekörper (2) und eine Erfassungseinrichtung (3) aufweist, mit der die Bewegung des Schwebekörpers erfaßt wird, wobei aus einem der Bewegung des Schwebekörpers (2) entsprechenden Bewegungssignal ein der Schwingungsamplitude des Schwebekörpers (2) entsprechendes Schwingungssignal und der Hub des Schwebekörpers (2) abgeleitet werden und ein Fehler- bzw. Alarmsignal zur Blockadeerkennung erzeugt wird, wenn das Schwingungssignal für eine vorbestimmte Zeitdauer einen Mindestwert unterschreitet, **dadurch gekennzeichnet, daß** das Bewegungssignal, umfassend das Schwingungssignal und den Hub, für wenigstens eine vorbestimmte Zeitdauer gespeichert wird, das gegenwärtige Bewegungssignal mit dem gespeicherten Bewegungssignal verglichen wird und eine Fehlfunktion des Schwebekörperdurchflußmeßgeräts detektiert und angezeigt wird, wenn aufgrund des Vergleichs des gegenwärtigen Bewegungssignals mit dem gespeicherten Bewegungssignal eine Verletzung der Monotoniebedingung, daß bei einem größeren Hub auch ein Schwingungssignal mit einer größeren Amplitude erwartet wird, festgestellt wird.

2. Verfahren nach Anspruch 1, **dadurch gekennzeichnet, daß** bei dem Vergleich des gegenwärtigen Bewegungssignals mit dem gespeicherten Bewegungssignal getrennt ein Vergleich bezüglich der Bewegung des Schwebekörpers (2) längs der Strömungsrichtung des Mediums und/oder der Bewegung des Schwebekörpers (2) senkrecht zur Strömungsrichtung des Mediums durchgeführt wird.

## Claims

1. Method for the prediction of the state of a floating body flow meter, wherein the floating body flow meter has a measuring tube (1) in which the medium flows against gravitational forces, a floating body (2) being provided in the measuring tube (1) and being movable at least in flow direction and a logging device (3) with which the movement of the floating body is recorded, wherein either a respective movement signal from the movement of the floating body (2) or a respective oscillation signal of the oscillation amplitude of the floating body (2) and the range of the floating body (2) are derived and an error or alarm signal is generated for blockade recognition when the oscillation signal falls below a lowest given value for a certain time span, **characterized in that** the movement signal, including oscillation and range, is saved for at least a given time span, the current movement signal is compared with the saved movement signal and an error function of the floating body flow meter is detected and indicated when, due to the comparison of the current movement signal with the saved movement signal, a violation of the monotony condition, that an oscillation signal with a greater amplitude is expected in a greater range, is determined.

2. Method according to claim 1, **characterized in that** in the comparison of the current movement signal with the saved movement signal, a comparison regarding the movement of the floating body (2) along the flow direction of the medium and/or the movement of the floating body (2) perpendicular to the flow direction of the medium is carried out separately.

## Revendications

1. Procédé pour la prévision de l'état d'un instrument de mesure du débit de matières en suspension, dans lequel l'instrument de mesure du débit de matière en suspension présente un tube de mesure (1) traversé par le milieu à l'encontre de la force de gravité, une matière en suspension (2) prévue dans le tube de mesure (1) et mobile au moins dans la direction d'écoulement, ainsi qu'un mécanisme d'enregistrement (3) avec lequel on enregistre le mouvement de la matière en suspension, un signal d'oscillation correspondant à l'amplitude d'oscillation de la matière en suspension (2) et la course de la matière en suspension (2) étant dérivés d'un signal de mouvement correspondant au mouvement de la matière en suspension (2), un signal d'erreurs, respectivement d'alarme pour l'identification d'un blocage étant généré lorsque le signal d'oscillation dépasse vers le bas une valeur minimale pendant un laps de temps prédéterminé, **caractérisé en ce que** le signal de mouvement, comprenant le signal d'oscillation et la course, est mémorisé pendant au moins un laps de temps prédéterminé, le signal de mouvement en vigueur est comparé avec le signal de mouvement mémorisé et un dysfonctionnement de l'instrument de mesure du débit de matières en suspension est détecté et affiché lorsque, sur base de la comparaison du signal de mouvement en vigueur au signal de mouvement mémorisé, on constate une atteinte à la condition de monotonie qui fait également que l'on s'attend, lors d'une course supérieure, à un signal d'oscillation présentant une amplitude supérieure.

2. Procédé selon la revendication 1, **caractérisé en ce que**, lors de la comparaison du signal de mouvement en vigueur au signal de mouvement mémorisé, on procède, de manière séparée à une comparaison quant au mouvement de la matière en suspension (2) dans la direction d'écoulement du milieu et/ou à une comparaison quant au mouvement de la matière en suspension (2) perpendiculairement à la direction d'écoulement du milieu.
